# EUROPEAN PATENT APPLICATION

(11) **EP 4 563 446 A1**
(43) Date of publication of application: **04.06.2025**
(21) Application number: 24216228.7
(22) Date of filing: 28.11.2024
(51) Int. Cl.: B62D 21/10, B62D 33/063

(54) **MULTIPURPOSE VEHICLE AND MULTIPURPOSE VEHICULAR SYSTEM**

(30) Priority: 01.12.2023 IT 202300025689
(71) Applicant: CNH Industrial Italia S.p.A., 10156 Torino (IT)
(72) Inventor: Bianco, Guido, 10156 Turin (IT)
(74) Representative: CNH Industrial IP Department

(57) **Abstract**

Multipurpose vehicle (1) comprising a body (4) carried in movable manner on ground via ground engaging means (5), said body (4) defining a planar support surface (8) faced opposite to ground engaging means (5) and an operative arm assembly (9) carried by body (4) and housed in a seat (11) defined by body (4), the operative arm assembly (9) being configured to carry an operative arrangement (3) for the multipurpose vehicle and being configured to assume a plurality of configurations between a first limit configuration in which it is entirely contained within seat (11) and does not protrude over planar support surface (8) and a second limit configuration in which it is fully extended outside seat (11).

## Description

### TECHNICAL FIELD

The present invention concerns a vehicle, in particular a multipurpose vehicle for off-road applications.

The present invention finds its preferred, although not exclusive, application in agriculture or in earthmoving fields. Reference will be made to this application by way of example below.

### BACKGROUND OF THE INVENTION

Agriculture and earthmoving are typical field of use of special vehicle such as tractors, handlers, scrapers, trucks etc.

Such vehicles, generally known as "heavy vehicles" are characterized by peculiar bodies that moves on the ground and that are provided with functional elements such as booms, cabs, caissons etc.

It is therefore known that the manufacturers need to design and produce different machines for each different use in the aforementioned fields. Accordingly, costs for manufacturing and managing the maintenance of such high typology of vehicle is high.

Similarly, the user needs to buy a number of vehicle that can cover the operations that needs.

Therefore, the need is felt to reduce the costs of manufacturing and maintaining heavy vehicles in agriculture and earthmoving fields, for both manufacturers and users, without compromising the specific characteristics of such heavy vehicles.

An aim of the present invention is to satisfy the above mentioned needs in a cost-effective and optimized manner.

### SUMMARY OF THE INVENTION

The aforementioned aim is reached by a vehicle and a vehicular system as claimed in the appended set of claims that are integral part of the present description.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective view of a multipurpose vehicle according of the invention;
- Figure 2 is a lateral schematic view of a vehicular system comprising a multipurpose vehicle according to the invention;
- Figure 3, 4, 5 are schematic lateral view of the vehicular system of figure 2, in different operative conditions;
- Figure 6 is a perspective view of a different configuration of the vehicular system according to the invention;
- Figures 7, 8, 9 and 10 are schematic views of respective different configurations of the vehicular system according to the invention.

### DETAILED DESCRIPTION OF THE INVENTION

In the attached figures reference 1 indicates globally a vehicular system 1 comprising a multipurpose vehicle 2 and an operative arrangement 3 carried by such multipurpose vehicle 2, as described in the following.

Vehicle 2 comprises a body 4 that is movable on grounds via ground engaging means 5, such as wheels 6 as disclosed in the depicted embodiment; clearly crawlers or any suitable way to allow motion on grounds can be used as ground engaging means 5.

In the disclosed embodiment, the wheels 6 are preferably electric wheels and are carried one independent to the other with respect to the body 4 via suspension means 7.

Accordingly, such suspension means 7 are independent one to the other and voted to support a single wheel 6 with respect to the body 4.

In particular, therefore, vehicle 1 can be an electric vehicle, i.e. comprising electrical energy storage means configured to store electrical energy and to exchange this latter with the electric wheels.

Body 4 is substantially a parallelepiped therefore extends along a, main, longitudinal axis A and a transversal axis B.

It is noticed that the body 4 is substantially a plate, therefore its width along a vertical axis C is lower than the extension over longitudinal or transversal axes A, B.

According to the above, the body 4 defines a planar support surface 8, faced opposite to ground engaging means 5.

The vehicle 2 further comprises an operative arm 9 that is carried in a movable manner by the body 4. In detail, the operative arm 9 is configured to assume a plurality of operative configurations between a first limit configuration wherein it is housed entirely within a seat 11 realized in the body 4 and does not protrude over the planar support surface 8 and a second limit configuration of fully extension outside the aforementioned seat 11.

It is clear that the second limit configuration may assume different shape in the space above planar support surface 8 or below body 4 (as detailed below) the according to the requested angular position, as shown in the following.

It is noticed that the seat 11 is preferably realized parallel to the longitudinal axis A along at least part of the body 4 extension. Preferably, the seat 11 is realized in the middle, in particular coincided with the sagittal plane of the body 4.

Even if not shown, the seat 11 may extend all along the extension of the body 4 along longitudinal axis A. In detail, the seat 11 is substantially an opening within the planar support surface 8 and may be realized adjacent to a perimetral corniche 13 that defines at least one edge of the seat 11.

The vehicle 1 further comprises a cover 12 configured to close the seat 11, thereby allowing the entire body 4 to define the aforementioned planar support surface 8, when the arm 9 is not in use or used in particular range of extension. The cover 12 and the cornice 13 can be selectively removed from the body 4 if it is envisaged movement of the operative arm assembly 9 within a preset range.

It is furthermore noticed that seat 11 is configured, at least in part, to pass through the body 4, thereby allowing to a portion of the operative arm assembly 9 to pass above or below body 4.

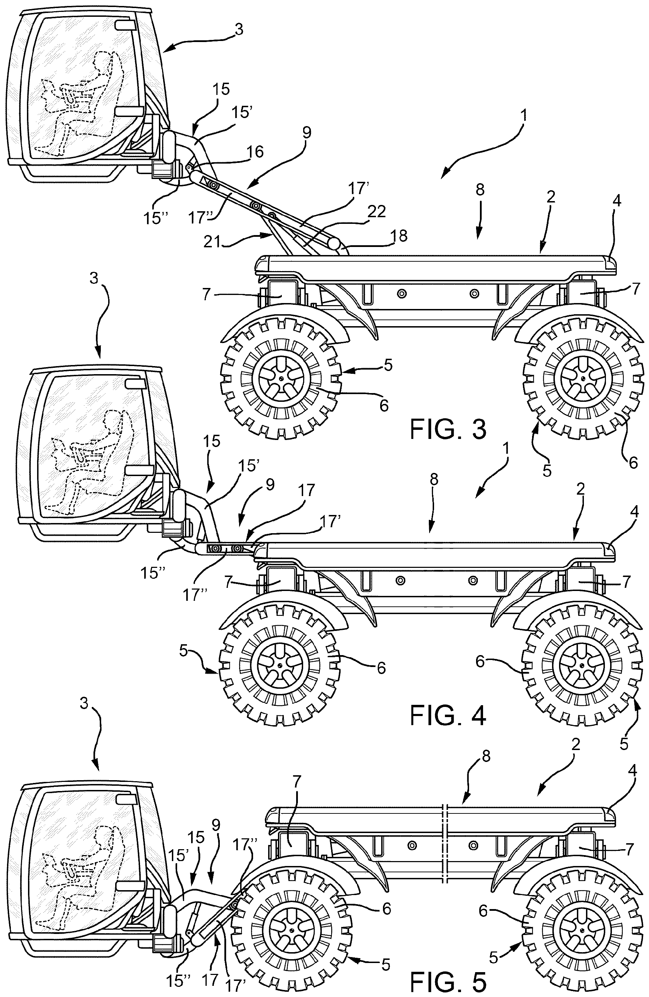

The operative arm assembly 9, with better detail on figures 3 to 5, comprises essentially a coupling portion 15, a operative arm 17, and a base portion 18.

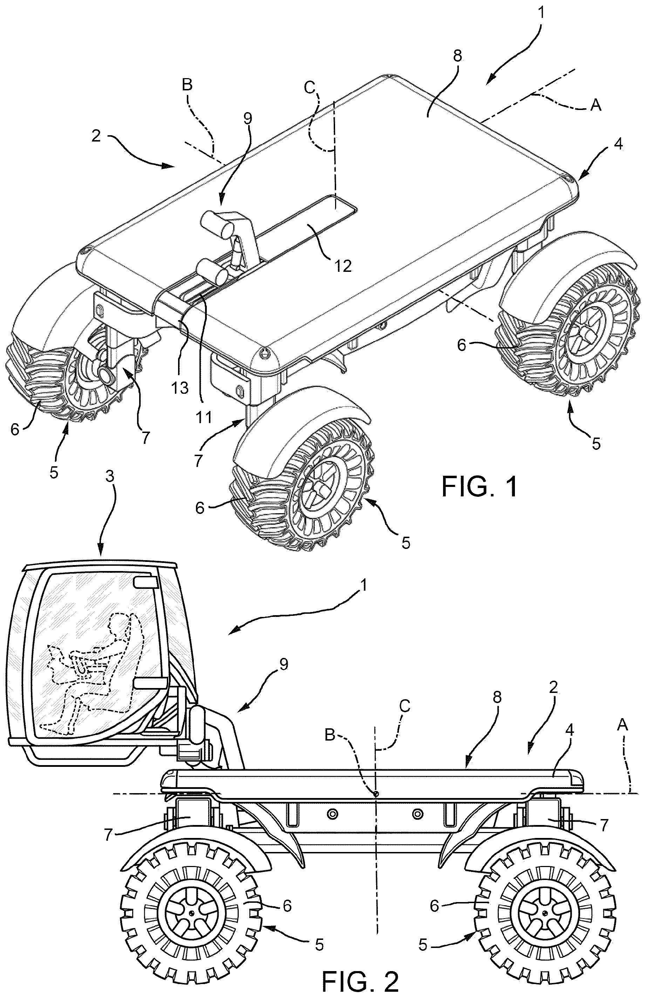

The coupling portion 15, as can be seen also by figure 1, comprises a first and a second portions 15', 15'' connected by an actuator 16, each defining a first and a second coupling ends 15a, 15b configured to cooperate with the operative arrangement 3 to allow its coupling.

The actuator 16 is configured to allow the first and second portions 15', 15'' to get closer or farther. In particular, the actuator 16 is a hydraulic cylinder that may retract or extend to allow the first and second portions 15', 15" to get closer or farther. To this aim, at least one between the first and second portions 15', 15'' is carried by a hinge with respect to operative arm 17.

The operative arm 17 allows connection between the base arm 18 and the coupling portion 15. In detail, the operative arm 17 comprises a frame portion 17' and a sliding portion 17" configured to slide within the frame portion 17''.

In the disclosed embodiment, the sliding portion 17" is connected via hinge to one of the first and second portions 15', 15'' and hinged connected to the base portion.

The aforementioned hinge connections are configured to allow rotation about an axis parallel to transversal axis B.

The sliding portion 17'' is moved via actuator means 21 such as a hydraulic cylinder. Similarly, the frame portion 17' can be moved via actuator means 22 such as a hydraulic cylinder.

The base portion 18 can be, furthermore, carried in a movable manner with respect to the body 4, via actuator means (not shown) to vary its position with respect to the body 4 within seat 11.

The aforementioned actuator means 16, 21, 22 are controlled by a control unit, advantageously an electronic control unit, connected to the actuator means 16, 21, 22 and to input means (not shown) configured to send a related signal representing a request of the user. Such input means may be a device, such as buttons, display, icons on the operative arrangement 3 itself or a remote device, such a s controller or a smartphone, by which the user may control remotely the operation of the operative arm assembly (9). Clearly such input means may be shared for controlling other operation of the vehicle or the entire operation of the vehicle itself.

The vehicle 1, as said, comprises at least an operative arrangement 3 carried by the body 4 and configured to execute a specific operation such as housing the driver, storing goods or performing a specific activity.

In detail, such operative arrangement 3 can be:
- Carried fixedly or in a movable manner by the operative arm assembly 9; and/or
- Carried fixedly or in a movable manner on the planar support surface 8 by body 4.

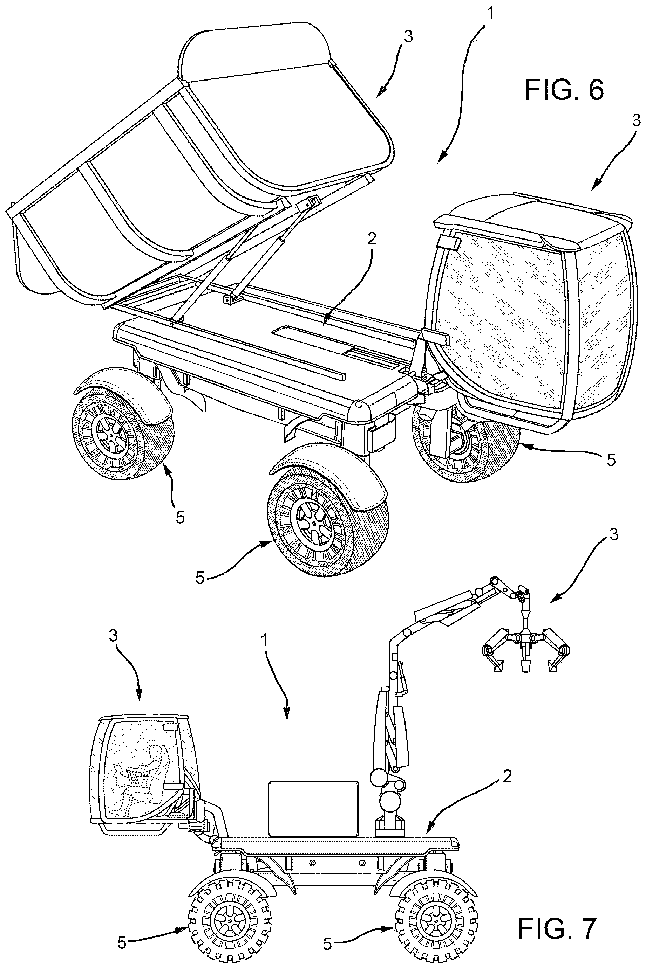

Figures 6 to 10 discloses a plurality of different operative arrangements 3 typologies, as below detailed.

Figure 6 discloses a "truck" configuration wherein the vehicle 1 comprises a caisson as operative arrangement 3 carried in a movable manner by body 4 and a cab as further operative arrangement 3 carried by the operative arm assembly 9.

Figure 7 discloses a "drag" configuration wherein the vehicle 1 comprises a drag as operative arrangement 3 carried in a movable manner by body 4 and a cab as further operative arrangement 3 carried by the operative arm assembly 9 and allows free space on the body 4 to support goods loaded or unloaded by the drag.

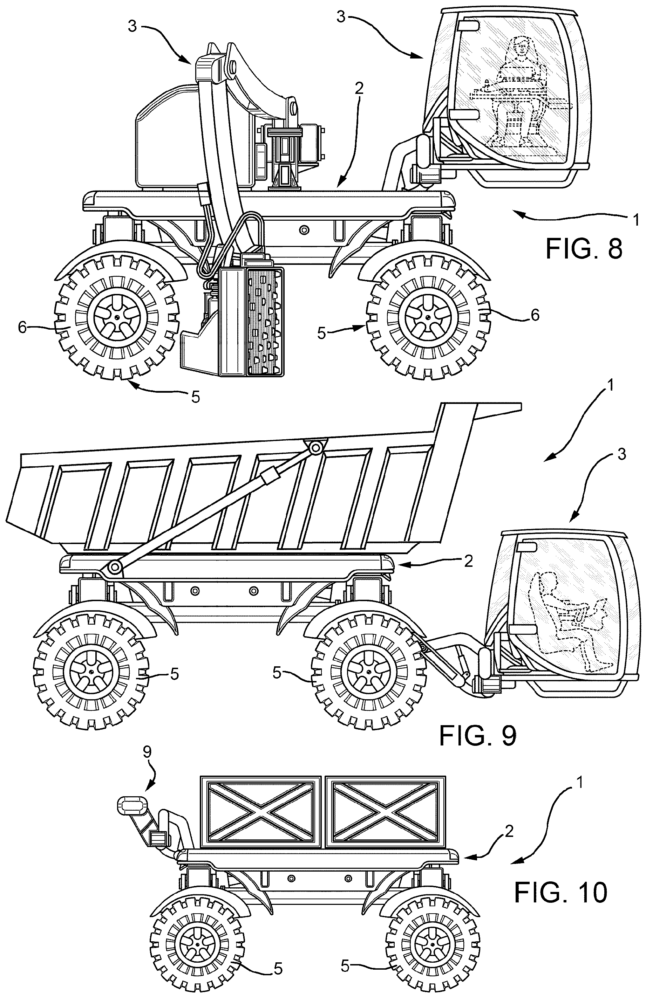

Figure 8 discloses a "shredder" configuration wherein the vehicle 1 comprises a shred assembly as operative arrangement 3 carried in a movable manner by body 4 and a cab as further operative arrangement 3 carried by the operative arm assembly 9 and allows free space on the body 4 to support loads loaded or unloaded by the drag.

Figure 9 discloses a further "truck" configuration wherein the vehicle 1 comprises a caisson as operative arrangement 3 carried in a movable manner by body 4 and occupying all the space over the body 4 and a cab as further operative arrangement 3 carried by the operative arm assembly 9 over the space of the body 4.

Figure 10 discloses a an autonomous/remote-controlled vehicle configuration wherein the vehicle 1 comprises image acquisition means as operative arrangement 3 carried in a movable manner by body 4 and the remaining space of the planar support surface 8 is suitable for transporting goods.

In such case, the electronic control unit controlling actuator means 16, 21, 22 may comprise elaboration means configured to acquire data from image acquisition means carried by the operative arm assembly 9 and control the vehicle 1 or other devices thereof.

The operation of the embodiment of the invention as described above is the following.

Generally speaking, the vehicle 1 moves on ground via wheels 6 in order to reach the position in which the operative arrangement 3 may operate.

Making reference to the embodiment of figures 2 to 5, the user may control the cab to move with respect to body to reach a high position (figure 3), an intermediate position (figure 4) or a lowered position (figure 5) via operative arm assembly 9 controlled by the respective actuator means 16, 21, 22.

Making reference to the embodiment of figures 6 and 7, the user may move the cab, as in figures 2 to 5 embodiments, and further use the additional operative arrangement 3 to drag or to shred, respectively.

Referring to figures 6 and 9, the user may user may move the cab, as in figures 2 to 5 embodiments, and further use the additional operative arrangement 3 to store material in the caisson.

Referring to figure 10, the user may remotely control the vehicle 1 via image acquired by image acquisition means carried by operative arm assembly 9 and move the vehicle 1 on ground or to perform specific operation (if any further operative arrangement 3 is provided).

In view of the foregoing, the advantages of vehicle and the system according to the invention are apparent.

Thanks to the vehicle 1 described above, the manufacturing costs for providing different typologies of vehicles and customizing these latter is reduced.

Indeed, the manufacturer may provide vehicles with different sets of body dimensions and the user may buy different operational arrangements 3 to provide different vehicle configuration with reduced costs with respect to the existing situation.

Moreover, the planar body of the vehicle allows to install different typologies of operational arrangement 3 or allows to be used only as storage space.

Furthermore, the proposed vehicle can be remotely controlled thereby allowing the use in difficult or dangerous environment.

The provided operational arm assembly allows to reach different operational position for the operational arrangement connected thereon, thereby providing a great versatility of the vehicle.

It is clear that modifications can be made to the described vehicle and system which do not extend beyond the scope of protection defined by the claims.

Clearly, number of operative arm assembly or the number of this latter carried by the vehicle may vary. Similarly, the typologies of operative arrangements may vary according to the peculiar use of the vehicle 1.

As already stated, the ground engaging means may be of any typology.

## Claims

1. Multipurpose vehicle (1) comprising a body (4) carried in movable manner on ground via ground engaging means (5), said body (4) defining a planar support surface (8) faced opposite to ground engaging means (5) and an operative arm assembly (9) carried by said body (4) and housed in a seat (11) defined by said body (4), said operative arm assembly (9) being configured to carry an operative arrangement (3) for said multipurpose vehicle and being configured to assume a plurality of configurations between a first limit configuration in which it is entirely contained within said seat (11) and does not protrude over said planar support surface (8) and a second limit configuration in which it is fully extended outside said seat (11).

2. Multipurpose vehicle according to claim 1, wherein said body (4) has a parallelepiped shape.

3. Multipurpose vehicle according to claim 1 or 2, wherein said body (4) is a plate-shaped.

4. Multipurpose vehicle according to any of the preceding claims, wherein said wheels (6) are e-wheels.

5. Multipurpose vehicle according to any of the preceding claims wherein said operative arm assembly comprises a coupling portion (15), a operative arm (17), and a base portion (18), said coupling portion (15) being configured to allow the connection to said operative arrangement (3) and being carried by said operative arm (17), said operative arm (17) being operatively connected between said base portion (18) and said coupling portion (15) and said base portion (18) being carried by said body.

6. Multipurpose vehicle according to claim 5, wherein said coupling portion (15) comprises a first and a second arms (15', 15'') carried by said operative arm (17) and actuator means (16) operatively interposed between said first and second arms (15', 15'') to vary their relative position.

7. Multipurpose vehicle according to claim 5 or 6, wherein said operative arm (7) comprises a frame portion (7') and a sliding portion (7") slidably carried by said frame portion (7'), one between said first and second arms (15', 15'') being rigidly carried by one between said frame portion (7') and said sliding portion (7"), the other between said first and second arms (15', 15'') being movably carried by the other between said frame portion (7') and said sliding portion (711).

8. Multipurpose vehicle according to any of the preceding claims, comprising a cover (12) configured to close said seat (11) when said operative arm assembly is in said first operative configuration.

9. Multipurpose vehicle according to any of the preceding claims, comprising a suspension system (7) for said ground engaging means (5).

10. Multipurpose vehicle according to any of the preceding claims, wherein said vehicle (1) is an electric-traction vehicle.

11. Multipurpose vehicle according to any of the preceding claims, wherein said vehicle (1) is an autonomous or a remote-controlled vehicle.

12. System comprising a multipurpose vehicle (1) according to any of the preceding claims and an operative arrangement (3) carried by the body (4) of said vehicle (1).

13. System according to claim 12, wherein the operative arrangement (3) comprises at least one between the following:
- a cab;
- image acquisition means;
- a caisson; and/or
- a device configured to execute a specific operation.
